# EUROPÄISCHE PATENTANMELDUNG

(11) **EP 1 914 921 A1**
(43) Veröffentlichungstag der Anmeldung: **23.04.2008**
(21) Anmeldenummer: 06021839.3
(22) Anmeldetag: 18.10.2006
(51) Int. Cl.: H04L 1/18, H04L 12/28, H04L 12/56

(54) **Wiederholte Nachrichtenübertragung in einem Multihop-Funkkommunikationssystem**

(71) Anmelder: Nokia Siemens Networks GmbH & Co. KG, 81541 München (DE)
(72) Erfinder: Kuipers, Martin, 14624 Dallgow-Döberitz (DE); Wegner, Frank, 13407 Berlin (DE)

(57) **Zusammenfassung**

Die Erfindung betrifft ein Verfahren zur Kommunikation per Funk, bei dem eine an eine erste Funkstation (SI) adressierte von einer zweiten Funkstation (R) gesendete Nachricht (DATA) von einer dritten Funkstation (H) empfangen wird. Die dritte Funkstation (H) empfängt eine von der ersten Funkstation (SI) gesendete Fehlernachricht (NACK), wobei die Fehlernachricht (NACK) eine erneute Übertragung der Nachricht (DATA) an die erste Funkstation (SI) anfordert. Im Anschluss sendet die dritte Funkstation (H) die Nachricht (DATA) an die erste Funkstation (SI). Weiterhin betrifft die Erfindung Funkstationen (SI, H) zur Durchführung des Verfahrens.

## Beschreibung

Die Erfindung betrifft ein Verfahren zur Kommunikation per Funk, bei welchem eine Funkstation eine Fehlernachricht sendet, wobei die Fehlernachricht eine erneute Übertragung der Nachricht an die erste Funkstation anfordert.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige Teilnehmerstationen oder netzseitige Funkstationen wie Repeater, Funkzugangspunkte oder Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Derzeitige Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Ein weiteres Beispiel stellen Breitbandnetze mit drahtlosem Zugang beispielsweise gemäß IEEE 802.16 dar. Zukünftige Mobilfunkkommunikationssysteme können z.B. Weiterentwicklungen von UMTS, als LTE (Long Term Evolution) bezeichnet, oder Systeme der vierten Generation, sowie Ad-hoc-Netze sein. Außer weiträumig organisierten (supralokalen) zellularen, hierarchischen Funknetzen existieren drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Funkstationen können nur dann direkt miteinander kommunizieren, wenn sie sich beide im Funkabdeckungsbereich der jeweils anderen Funkstation befinden. Ist eine direkte Kommunikation nicht möglich, so können Nachrichten zwischen diesen Funkstationen über andere Funkstationen, welche - indem sie die Nachrichten weiterleiten - als Relaisfunkstationen bzw. Repeater fungieren, übertragen werden. Eine derartige Nachrichtenweiterleitung kann, abhängig von der konkreten Ausgestaltung des Funkkommunikationssystems, sowohl von Teilnehmerfunkstationen als auch von netzseitigen Funkstationen durchgeführt werden. Nachrichten können beispielsweise in einem WLAN zwischen einem Funkzugangspunkt und weit von dem Funkzugangspunkt entfernten Teilnehmerfunkstationen weitergleitet werden. Auch in einem Adhoc-Modus eines Funkkommunikationssystems können Teilnehmerfunkstationen über einen oder mehrere Sprünge (Hop bzw. Multihop) miteinander kommunizieren, ohne dass vermittelnde Einrichtungen wie z.B. Basisstationen oder Funkzugangspunkte zwischengeschaltet werden. Bei einer Nachrichtenübertragung von einer Teilnehmerfunkstation an eine andere Teilnehmerfunkstation außerhalb ihres Funkabdeckungsbereiches können die Nachrichten von anderen Teilnehmerfunkstationen weitergeleitet werden, welche somit als Relaisfunkstationen fungieren.

Aufgrund von nicht idealen Funkausbreitungsbedingungen zwischen sendender und empfangender Funkstation werden Nachrichten während der Funkübertragung oftmals verfälscht. Erkennt der Empfänger, dass die ihm vorliegende Nachricht nicht der gesendeten Nachricht entspricht, kann eine Fehlernachricht von dem Empfänger an den Sender der Nachricht gesendet werden. Derartige Fehlernachrichten werden üblicherweise als NACK (Negative ACKnowledgement) bezeichnet. Auf den Empfang einer Fehlernachricht hin erfolgt in der Regel eine wiederholte Versendung der Nachricht von dem Sender an den Empfänger.

Der Erfindung liegt die Aufgabe zugrunde, effiziente Verfahren zur Kommunikation per Funk aufzuzeigen, bei welchen eine Funkstation eine Fehlernachricht sendet, wobei die Fehlernachricht eine erneute Übertragung der Nachricht anfordert.

Diese Aufgabe wird durch ein Verfahren mit den Merkmalen des Anspruchs 1, sowie durch ein Verfahren und durch Vorrichtungen mit Merkmalen von nebengeordneten Ansprüchen gelöst. Vorteilhafte Ausgestaltungen und Weiterbildungen sind Gegenstand von Unteransprüchen.

Gemäß dem ersten erfindungsgemäßen Verfahren zur Kommunikation per Funk wird eine an eine erste Funkstation adressierte von einer zweiten Funkstation gesendete Nachricht von einer dritten Funkstation empfangen. Die dritte Funkstation empfängt eine von der ersten Funkstation gesendete Fehlernachricht, wobei die Fehlernachricht eine erneute Übertragung der Nachricht an die erste Funkstation anfordert. Im Anschluss sendet die dritte Funkstation die Nachricht an die erste Funkstation.

Gemäß dem zweiten erfindungsgemäßen Verfahren zur Kommunikation per Funk empfängt eine erste Funkstation eine von einer zweiten Funkstation gesendete an die erste Funkstation adressierte Nachricht. Die erste Funkstation sendet eine Fehlernachricht, wobei die Fehlernachricht eine erneute Übertragung der Nachricht an die erste Funkstation anfordert. Im Anschluss empfängt die erste Funkstation die Nachricht von einer dritten Funkstation.

Während das erste erfindungsgemäße Verfahren der Sicht der dritten Funkstation entspricht, entspricht das zweite erfindungsgemäße Verfahren der Sicht der ersten Funkstation. Für beide Verfahren gelten die folgenden Ausführungen:

Die Nachricht, welche von der zweiten Funkstation gesendet wird, ist an die erste Funkstation adressiert. Dies bedeutet, dass die erste Funkstation der bestimmungsgemäße Empfänger der Nachricht ist. Die Nachricht enthält somit zumindest ein Informationselement, an welchem erkennbar ist, dass die Nachricht für die erste Funkstation bestimmt ist. Hingegen ist die Nachricht nicht für die dritte Funkstation bestimmt. Obwohl die Nachricht nicht für die dritte Funkstation bestimmt ist, ist es dennoch möglich, dass diese sie empfängt.

Es wird von der ersten Funkstation eine Fehlernachricht gesendet, welche die Nachricht betrifft. Durch die Fehlernachricht wird implizit oder explizit indiziert, dass die erste Funkstation die Nachricht erneut zu empfangen wünscht. Da eine erneute Übertragung einer Nachricht in der Regel aufgrund eines Übertragungsfehlers nötig ist, entspricht eine explizite Fehlernachricht üblicherweise einer Übertragungsfehlerbenachrichtigung. Ein implizites Indizieren des Wunsches nach einem erneuten Empfang der Nachricht kann z.B. durch eine Empfangsbestätigung erfolgen. Versendet die erste Funkstation beispielsweise eine Empfangsbestätigung für eine erste Nachricht und im Anschluss eine Empfangsbestätigung für eine dritte Nachricht, ohne zuvor eine Empfangsbestätigung für eine zweite Nachricht zu versenden, so kann die Empfangsbestätigung für die dritte Nachricht als Fehlernachricht für die zweite Nachricht interpretiert werden.

Auf die Fehlernachricht hin erfolgt die Versendung der Nachricht nicht oder zumindest nicht nur durch die zweite Funkstation. Vielmehr wird die Nachricht durch die dritte Funkstation zu der ersten Funkstation gesendet, und somit durch eine andere Funkstation als diejenige, deren vorhergehende Versendung der Nachricht zur Fehlernachricht geführt hat.

In Weiterbildung der Erfindung führt die erste Funkstation nach Empfang der Nachricht von der zweiten Funkstation eine Überprüfung der Fehlerhaftigkeit der Nachricht durch. Hierzu kann ein Fehlererkennungskode eingesetzt werden, welcher zusammen oder getrennt von der Nachricht zur ersten Funkstation übertragen werden kann. Vorzugsweise erfolgt die Versendung der Fehlernachricht in Abhängigkeit von dem Ergebnis der Überprüfung der Fehlerhaftigkeit, indem die Fehlernachricht dann gesendet wird, wenn die von der ersten Funkstation empfange Nachricht Fehler oder ein bestimmtes Mindestmaß an Fehlern aufweist. Ziel der erneuten Übertragung der Nachricht an die erste Funkstation ist ein Vorliegen der Nachricht bei der ersten Funkstation mit weniger Fehlern.

Einer Ausgestaltung der Erfindung gemäß führt die dritte Funkstation vor der Versendung der Nachricht eine Überprüfung der Fehlerhaftigkeit der Nachricht durch. Diese Überprüfung kann dazu verwendet werden, zu entscheiden, ob eine Versendung der Nachricht durch die dritte Funkstation erfolgen kann oder soll. Die Überprüfung kann nach Empfang der Nachricht und vor Empfang der Fehlernachricht durch die dritte Funkstation erfolgen, oder auch nach Empfang der Fehlernachricht durch die dritte Funkstation.

Mit Vorzug handelt es sich bei der Versendung der Nachricht durch die dritte Funkstation um die erste Versendung der Nachricht durch die dritte Funkstation. Dies bedeutet, dass die dritte Funkstation nicht bereits zuvor versucht hat, die Nachricht fehlerfrei an die erste Funkstation oder eine andere Funkstation zu übertragen.

Vorteilhaft ist es, wenn es sich bei der zweiten Funkstation um eine die Nachricht weiterleitende Funkstation handelt. In diesem Fall wird die Nachricht über mehrere Sprünge zu der ersten Funkstation übertragen, wobei es sich bei der Übertragung zwischen der zweiten Funkstation und der ersten Funkstation um den letzten dieser zumindest zwei Sprünge handelt. Alternativ hierzu ist es jedoch auch möglich, die Erfindung für die Übertragung einer Nachricht über lediglich einen Sprung, d.h. für eine direkte Nachrichtenübertragung einzusetzen.

In Ausgestaltung der Erfindung empfängt die zweite Funkstation die Fehlernachricht und ermittelt, ob die Nachricht erneut von der zweiten Funkstation zu versenden ist. Bei dieser erneute Versendung durch die zweite Funkstation kann es sich sowohl um eine ursprüngliche Versendung als auch um eine Versendung durch Weiterleitung handeln. Auf diese Weise kann erreicht werden, dass die Nachricht nach der Versendung der Fehlernachricht lediglich durch die dritte Funkstation, und nicht durch die dritte und die zweite Funkstation versendet wird. Die Ermittlung kann anhand von von der dritten Funkstation gesendeten und von der zweiten Funkstation empfangenen Informationen erfolgen. So kann die dritte Funkstation die zweite Funkstation explizit darüber informieren, dass eine Versendung der Nachricht durch die dritte Funkstation erfolgt. Andererseits ist es auch möglich, dass es sich bei den von der dritten Funkstation gesendeten Informationen um die von der dritten Funkstation gesendete Nachricht handelt, welcher die zweite Funkstation entnimmt, dass eine erneute Versendung durch die zweite Funkstation nicht nötig ist. Zusätzlich oder alternativ zur Nutzung der Informationen von der dritten Funkstation kann die Ermittlung anhand von von der ersten Funkstation versendeten und von der zweiten Funkstation empfangenen Informationen erfolgen. Bei diesen Informationen kann es sich z.B. um eine explizite Mitteilung von der ersten an die zweite Funkstation betreffend den Empfang der Nachricht durch die erste Funkstation handeln, oder um an die dritte Funkstation gesendete Informationen betreffend die Vorbereitung der oder die erfolgte Versendung der Nachricht von der dritten Funkstation an die erste Funkstation.

Einer Weiterbildung der Erfindung gemäß hängt einer oder mehrere Parameter der Versendung der Nachricht durch die dritte Funkstation ab von einer Empfangsqualität der Fehlernachricht auf Seiten der dritten Funkstation. So kann bei guter Empfangsqualität auf einen guten Funkkanal zwischen der ersten und der dritten Funkstation geschlossen werden. Bei guten Funkbedingungen kann z.B. eine geringe Fehlerschutzkodierung und/oder ein hochwertiges Modulationsverfahren und/oder eine niedrige Sendeleistung angewandt werden. Insbesondere kann der Parameter oder die Parameter von denjenigen Parametern abweichen, welche zuvor für die Versendung der Nachricht von der zweiten Funkstation verwendet wurden.

Vorteilhafterweise ist die Fehlernachricht an die zweite Funkstation adressiert. In diesem Fall wird durch die Fehlernachricht die zweite Funkstation zur erneuten Versendung der Nachricht aufgefordert. Die Fehlernachricht ist dementsprechend nicht für die dritte Funkstation bestimmt. Dennoch ist es möglich, dass die dritte Funkstation die Fehlernachricht empfängt und auf diesen Empfang mit der Versendung der Nachricht reagiert.

Einer Ausgestaltung der Erfindung gemäß speichert die dritte Funkstation die Nachricht nach dem Empfang für eine vorgegebene Zeitspanne. Diese Speicherung während der vorgegebenen Zeitspanne entspricht einem Abwarten, ob eine von der ersten Funkstation stammende Fehlernachricht von der dritten Funkstation empfangen wird. Tritt dies innerhalb der vorgegebenen Zeitspanne nicht ein, kann die Nachricht von der dritten Funkstation gelöscht werden.

Mit Vorzug erfolgt vor der Versendung der Nachricht durch die dritte Funkstation eine Kommunikation zwischen der ersten Funkstation und der dritten Funkstation betreffend für die Versendung der Nachricht zu verwendende Funkressourcen. Im Rahmen dieser Kommunikation erfolgt vorzugsweise eine Informationsversendung sowohl durch die erste als auch durch die dritte Funkstation; alternativ hierzu ist eine Informationsversendung lediglich durch die erste oder die dritte Funkstation möglich. Nach Abschluss der Kommunikation steht für die erste und die dritte Funkstation fest, welche Funkressourcen für die Versendung der Nachricht durch die dritte Funkstation verwendet werden. Der dritten Funkstation ist somit bekannt, welche Funkressourcen für die Versendung zu verwenden sind, und entsprechend ist der ersten Funkstation bekannt, welche Funkressourcen für den Empfang der Nachricht zu verwenden sind.

Die erste erfindungsgemäße Funkstation weist Mittel auf zum Empfangen einer an eine erste weitere Funkstation adressierten von einer zweiten weiteren Funkstation gesendeten Nachricht, sowie Mittel zum Empfangen einer von der ersten weiteren Funkstation gesendeten Fehlernachricht, wobei die Fehlernachricht eine erneute Übertragung der Nachricht an die erste weitere Funkstation anfordert, und Mittel zum Versenden der Nachricht an die erste weitere Funkstation im Anschluss an den Empfang der Fehlernachricht.

Die zweite erfindungsgemäße Funkstation weist Mittel auf zum Empfangen einer an die Funkstation adressierten von einer zweiten Funkstation gesendeten Nachricht, sowie Mittel zum Versenden einer Fehlernachricht, wobei die Fehlernachricht eine erneute Übertragung der Nachricht an die Funkstation anfordert, und Mittel zum Empfangen der Nachricht von einer dritten Funkstation im Anschluss an die Versendung der Fehlernachricht.

Die erfindungsgemäßen netzseitigen Funkstationen eignen sich insbesondere zur Durchführung der erfindungsgemäßen Verfahren, wobei dies auch auf die Ausgestaltungen und Weiterbildungen zutreffen kann. Hierzu können sie weitere geeignete Mittel umfassen.

Im folgenden wird die Erfindung anhand eines Ausführungsbeispiels näher erläutert. Dabei zeigen:
- Figur 1:: einen Ausschnitt aus einem Funkkommunikationssystem,
- Figur 2:: ein Flussdiagramm eines Verfahrensablaufs.

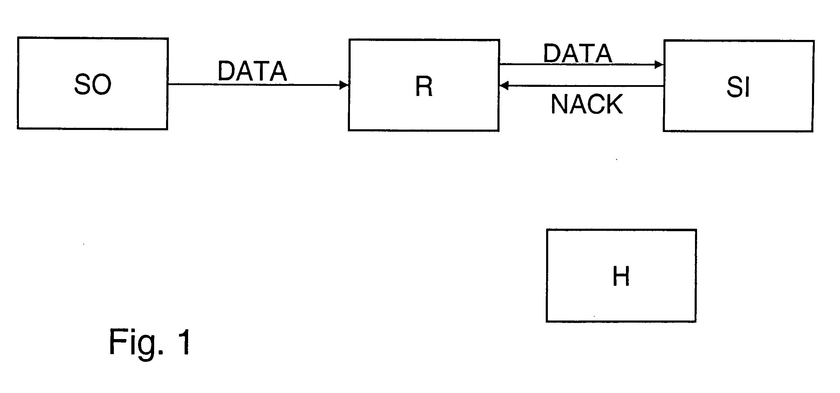

Der in Figur 1 dargestellte Ausschnitt aus einem Funkkommunikationssystem umfasst die Funkstationen SO, R, SI und H. Aufgrund der Anordnung der Funkstationen SO, R, SI und H ist eine direkte Kommunikation, d.h. die Übertragung von Nachrichten ohne Weiterleitung durch eine andere Funkstation, möglich zwischen den Funkstationen SO und R, zwischen den Funkstationen R und SI, zwischen den Funkstationen R und H, sowie zwischen den Funkstationen SI und H. Bei den Funkstationen SO, R, SI und H kann es sich jeweils um netzseitige Funkstationen wie Basisstationen, Funkzugangspunkte oder Repeater handeln, oder auch um Teilnehmerstationen. Die Erfindung ist in verschiedenartigen Funkkommunikationssystemen anwendbar, so z.B. in Mobilfunkkommunikationssystemen gemäß einer Weiterentwicklung von UMTS, als LTE (Long Term Evolution) oder 3G Plus bezeichnet, sowie in 4G Systemen oder in Systemen nach einem IEEE 802 Standard.

Im folgenden wird die Übertragung einer Nachricht DATA von der Funkstation SO, der "Source", zu der Funkstation SI, der "Sink", betrachtet. Da eine direkte Kommunikation zwischen den Funkstationen SO und SI nicht möglich ist, erfolgt eine Weiterleitung der Nachricht DATA durch die Funkstation R, welche somit als Relay oder Repeater fungiert. Das betrachtete Funkkommunikationssystem ermöglicht somit eine Informationsübertragung durch Multi-Hop. Handelt es sich bei der Funkstation SO um eine netzseitige Basisstationen oder einen Funkzugangspunkt und bei der Funkstation SI um eine Teilnehmerstation, so liegt eine Nachrichtenübertragung in Abwärtsrichtung vor. Handelt es sich hingegen bei der Funkstation SO um eine Teilnehmerstation und bei der Funkstation SI um eine netzseitige Basisstationen oder einen Funkzugangspunkt, so liegt eine Nachrichtenübertragung in Aufwärtsrichtung vor. Die Nachrichtenweiterleitung durch die Funkstation R kann in beiden Fällen von einer netzseitigen oder einer teilnehmerseitigen Funkstation übernommen werden.

Nach Empfang der Nachricht DATA überprüft die Funkstation SI die Nachricht DATA auf Korrektheit. Hierzu weist die Nachricht DATA ein Fehlererkennungskode wie z.B. eine Prüfsumme auf, welcher eine derartige empfängerseitige Feststellung ermöglicht. Der Fehlererkennungskode ermöglicht die Feststellung, ob der Inhalt der der Funkstation SI vorliegenden Nachricht DATA mit dem Inhalt der der Funkstation SO vor der Versendung vorliegenden Nachricht DATA übereinstimmt. Stellt die Funkstation SI fest, dass die Nachricht DATA nicht fehlerfrei empfangen wurde, versendet sie eine negative Bestätigungsnachricht NACK. Durch die negative Bestätigungsnachricht NACK wird eine erneute Versendung der Nachricht DATA angefordert.

Eine wiederholte Versendung der Nachricht DATA könnte durch die Funkstation R oder die Funkstation SO erfolgen. Ob auf eine negative Bestätigungsnachricht NACK hin eine direkte Übertragung, d.h. eine ursprüngliche Versendung durch die Funkstation R, oder eine weitergeleitete Übertragung, d.h. eine ursprüngliche Versendung durch die Funkstation SO, durchführbar ist, hängt davon ab, welche Funkstation eine Speicherung der Nachricht DATA in einem so genannten Retransmissions-Speicher (englisch: retransmission buffer) vornimmt.

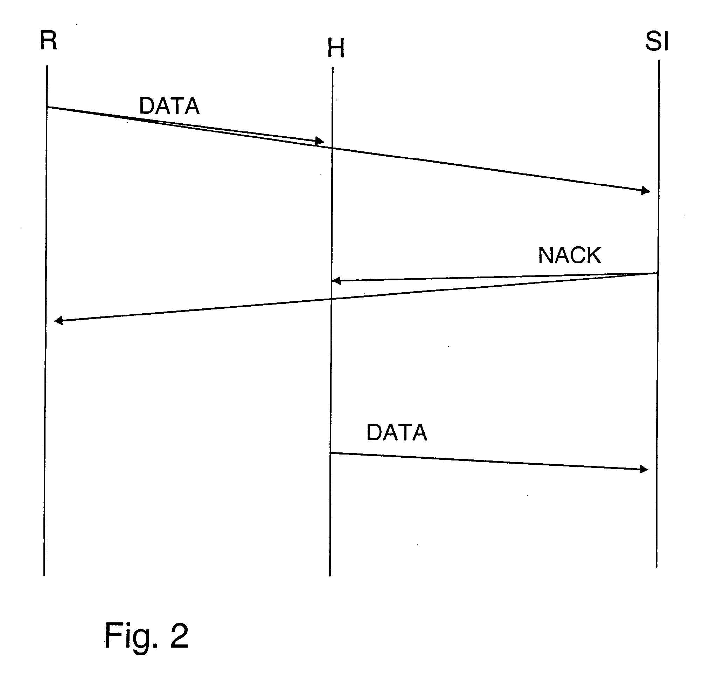

In Figur 2 ist ein Verfahrensablauf für den Fall dargestellt, dass die Versendung der Nachricht DATA auf die negative Bestätigungsnachricht NACK hin durch die Funkstation H erfolgt. Wie bereits erwähnt ist eine direkte Kommunikation sowohl zwischen den Funkstationen R und H, als auch zwischen den Funkstationen SI und H möglich. Die Funkstation H empfängt daher wie in Figur 2 dargestellt sowohl die von der Funkstation R versendete Nachricht DATA, als auch die von der Funkstation SI versendete negative Bestätigungsnachricht NACK.

Die Funkstation H empfängt die Nachricht DATA und die negative Bestätigungsnachricht NACK, obwohl diese Nachrichten nicht für die Funkstation H bestimmt sind. Dies liegt darin begründet, dass insbesondere in Funkstationen Multi-Hop oder Ad-hoc Systemen in der Regel die Nachrichtenversendungen der Funkstationen in ihrer Nachbarschaft beobachten, z.B. um auf diese Weise festzustellen, wann das Funkmedium frei bzw. belegt ist. Weiterhin ist es möglich, dass die Funkstationen die Funkressourcenzuweisung anderer Funkstationen abhören, so dass sie gezielt diese zugewiesenen Ressourcen beobachten und auf somit an andere Funkstationen adressierte Nachrichten empfangen können. Sind bestimmte Funkressourcen für die Versendung von negativen Bestätigungsnachrichten NACK vorgesehen, so sollten diese Funkressourcen von den Funkstationen abgehört werden.

Der Funkstation H liegt demnach einerseits die Nachricht DATA vor, und andererseits ist der Funkstation H aufgrund der negativen Bestätigungsnachricht NACK bekannt, dass die Funkstation SI eine erneute Versendung der Nachricht DATA benötigt. Daraufhin versendet die Funkstation H die Nachricht DATA an die Funkstation SI.

Vor der Versendung der Nachricht DATA durch die Funkstation H kann diese anhand des bereits erwähnten Fehlererkennungskodes überprüfen, ob sie die Nachricht DATA fehlerfrei empfangen hat. Trifft dies nicht zu, sollte auf die Versendung der Nachricht DATA durch die Funkstation H verzichtet werden. In diesem Fall erfolgt die erneute Versendung der Nachricht DATA durch die Funkstation R oder die Funkstation SO. Alternativ hierzu ist es möglich, dass die Funkstation H keine Überprüfung der empfangenen Nachricht DATA auf Korrektheit durchführt. Hierdurch wird Verarbeitungsaufwand auf Seiten der

Funkstation H eingespart. Die Funkstation H versendet dann nach Empfang der negativen Bestätigungsnachricht NACK die von ihr empfangene Nachricht DATA ohne Überprüfung auf Fehlerfreiheit.

Als weiteres Kriterium zur Entscheidung, ob die Funkstation H die empfangene Nachricht DATA an die Funkstation SI weiterleiten soll, kann die Qualität der von der Funkstation H empfangenen negativen Bestätigungsnachricht NACK eingesetzt werden. Wird die negative Bestätigungsnachricht NACK lediglich sehr schlecht empfangen, so liegt zwischen den Funkstationen H und SI ein großer Abstand oder schlechte Funkausbreitungsbedingen vor. Für diesen Fall kann entschieden werden, dass keine Versendung der Nachricht DATA durch die Funkstation H erfolgen soll. Alternativ oder zusätzlich kann die Qualität der von der Funkstation H empfangenen negativen Bestätigungsnachricht NACK verwendet werden, um Parameter für die Versendung der Nachricht DATA durch die Funkstation H zu bestimmen, wie z.B. die Sendeleistung oder die zu verwendenden Funkressourcen.

Vorzugsweise existiert eine bestimmte Zeitdauer, während welcher eine Funkstation an andere Funkstationen adressierte Nachrichten speichern soll. Empfängt die jeweilige Funkstation während dieser vorgegebenen Zeitspanne nach Empfang einer für eine andere Funkstation adressierten Nachricht keine negative Bestätigungsnachricht von der anderen Funkstation, so kann sie die Nachricht löschen.

Es ist möglich, dass für die Übertragung der Nachricht DATA zwischen den Funkstationen H und SI kann ein hierfür vorgesehener Kanal verwendet wird. Dieser vorgesehene Kanal kann von einer netzseitigen Funkstation von Zeit zu Zeit signalisiert werden. Alternativ kann dieser Kanal im gesamten Funkkommunikationssystem für diese Zwecke zur Verfügung stehen, so dass eine diesbezügliche Signalisierung nicht nötig ist. Weiterhin ist es möglich, dass für die Übertragung der Nachricht DATA zwischen den Funkstationen H und SI ein Austausch zwischen den Funkstationen H und SI erfolgt, wodurch der zu verwendende Kanal bestimmt wird.

Auf die negative Bestätigungsnachricht NACK hin sollte eine erneute Übertragung der Nachricht DATA von der Funkstation SO über die Funkstation R zu der Funkstation SI bzw. von der Funkstation R zu der Funkstation SI vermieden werden. Die Entscheidung darüber, ob eine Übertragung erneut über den gleichen Pfad erfolgen soll, kann von der Funkstation R getroffen werden. Hierzu überprüft die Funkstation R, ob sie eine der folgenden Informationen empfängt:
- Einen expliziten Hinweis von der Funkstation H dahingehend, dass die Funkstation H die Versendung der Nachricht DATA übernimmt.
- Die von der Funkstation H versendete Nachricht DATA.
- Einen Hinweis von der Funkstation SI dahingehend, dass sie die Nachricht DATA mittlerweile erneut empfangen hat.
- Informationen, welche zwischen den Funkstationen H und SI zur Vorbereitung der Übertragung der Nachricht DATA versendet werden.

Wird keine der genannten Informationen von der Funkstation R empfangen, so verarbeitet die Funkstation R die negative Bestätigungsnachricht NACK. Dies kann erfolgen, indem die Funkstation R die von ihr gespeicherte Nachricht DATA erneut versendet, oder indem die Funkstation R die Funkstation SO informiert, dass eine wiederholte Übertragung der Nachricht DATA an die Funkstation SI erfolgen soll.

Es erfolgt somit eine Wiederholung einer nicht erfolgreichen Nachrichtenübertragung, wobei die wiederholte Versendung nicht durch die Funkstation R vorgenommen wird, welche die erste Versendung durchgeführt hat, sondern durch eine andere Funkstation H, welche an der nicht erfolgreichen Übertragung nicht beteiligt war. Dieses Vorgehen weist mehrere Vorteile auf:
- Die erste Übertragung zwischen der Funkstation R und der Funkstation SI ist in der Regel aufgrund schlechter Funkausbreitungsbedingungen zwischen den beiden Funkstationen R und SI gescheitert. Daher besteht die Gefahr, dass auch eine wiederholte Übertragung nicht erfolgreich wäre bzw. dass für die wiederholte Übertragung eine stärkere Fehlerschutzkodierung und dementsprechend ein größerer Umfang an Funkressourcen und/oder eine höhere Sendeleistung aufgewendet werden müsste. Hingegen ist es wahrscheinlich, dass zwischen den Funkstationen H und SI eine bessere Funkverbindung besteht, so dass die Übertragung der Nachricht DATA von der Funkstation H zu der Funkstation SI mit größerer Wahrscheinlichkeit fehlerfrei gelingt bzw. dass von der Funkstation H die Nachricht DATA unter Verwendung eines kleineren Umfangs an Funkressourcen und/oder mit einer geringeren Sendeleistung gesendet werden kann. Hierdurch wird die durch die erneute Übertragung der Nachricht DATA hervorgerufene unerwünschte Interferenz und somit die Gesamtbelastung des Systems reduziert.
- Wenn es sich bei der Funkstation R um eine Funkstation handelt, über welche eine Vielzahl von Pfaden verläuft, ist die Funkstation R in der Regel stark ausgelastet. Dementsprechend bedeutet die wiederholte Versendung der Nachricht DATA durch die Funkstation R eine Verzögerung und Interferenz für andere Nachrichtenweiterleitungen. Dies gilt auch für die Funkstation SO, insbesondere für den Fall, dass es sich bei der Funkstation SO um eine netzseitige Basisstation oder einen Funkzugangspunkt handelt. Insbesondere wenn es sich bei der Funkstation H um eine Teilnehmerstation handelt, ist diese oftmals nicht ausgelastet, so dass die zusätzliche Übertragung der Nachricht DATA für die Funkstation H keine starke Belastung darstellt. Daher wird die Last von einer stark ausgelasteten Funkstation auf eine wenig ausgelastete Funkstation übertragen.
- In dem Fall, dass die Funkstation SO für die erneute Versendung der Nachricht DATA zuständig wäre, würde durch die erneute Übertragung eine deutliche Verzögerung entstehen. Denn die Nachricht DATA müsste über zwei Sprünge übertragen werden. Hingegen besteht eine direkte Verbindung zwischen den Funkstationen H und SI, so dass die erneute Übertragung der Nachricht DATA bei Unterstützung durch die Funkstation H rascher erfolgt.

Es kann vorgesehen ein, dass die Funktion der Funkstation H lediglich von bestimmten Funkstationen zu erfüllen ist. Bei diesen ausgewählten Funkstationen kann es sich z.B. um bestimmte zu Unterstützungszwecken installierte netzseitige Funkstationen handeln, oder um Teilnehmerstationen, welchen vom Netzbetreiber für das Zur-Verfügung-Stellen dieser Funktionalität eine Ausgleichsleistung gewährt wird.

Es wurde der Fall betrachtet, dass die Nachricht DATA über zwei Sprünge von der Sende-Funkstation SO zur Ziel-Funkstation SI übertragen wird. Diese Anzahl der Sprünge ist hierbei nur beispielhaft. Demgemäß ist die Erfindung auch auf eine direkte Nachrichtenübertragung, d.h. auf eine Übertragung über lediglich einen Sprung, und auf eine Nachrichtenübertragung über eine größere Anzahl von Sprüngen anwendbar.

## Patentansprüche

1. Verfahren zur Kommunikation per Funk, bei dem
eine an eine erste Funkstation (SI) adressierte von einer zweiten Funkstation (R) gesendete Nachricht (DATA) von einer dritten Funkstation (H) empfangen wird,
die dritte Funkstation (H) eine von der ersten Funkstation (SI) gesendete Fehlernachricht (NACK) empfängt, wobei die Fehlernachricht (NACK) eine erneute Übertragung der Nachricht (DATA) an die erste Funkstation (SI) anfordert, und
im Anschluss die dritte Funkstation (H) die Nachricht (DATA) an die erste Funkstation (SI) sendet.

2. Verfahren zur Kommunikation per Funk, bei dem
eine erste Funkstation (SI) eine von einer zweiten Funkstation (R) gesendete an die erste Funkstation (SI) adressierte Nachricht (DATA) empfängt,
die erste Funkstation (SI) eine Fehlernachricht (NACK) sendet, wobei die Fehlernachricht (NACK) eine erneute Übertragung der Nachricht (DATA) an die erste Funkstation (SI) anfordert, und
im Anschluss die erste Funkstation (SI) die Nachricht (DATA) von einer dritten Funkstation (R) empfängt.

3. Verfahren nach Anspruch 1 oder 2, bei dem die erste Funkstation (SI) nach Empfang der Nachricht (DATA) von der zweiten Funkstation (R) eine Überprüfung der Fehlerhaftigkeit der Nachricht (DATA) durchführt.

4. Verfahren nach einem der Ansprüche 1 bis 3, bei dem die dritte Funkstation (H) vor der Versendung der Nachricht (DATA) eine Überprüfung der Fehlerhaftigkeit der Nachricht (DATA) durchführt.

5. Verfahren nach einem der Ansprüche 1 bis 4, bei dem es sich bei der Versendung der Nachricht (DATA) durch die dritte Funkstation (H) um die erste Versendung der Nachricht (DATA) durch die dritte Funkstation (H) handelt.

6. Verfahren nach einem der Ansprüche 1 bis 5, bei dem es sich bei der zweiten Funkstation (R) um eine die Nachricht (DATA) weiterleitende Funkstation handelt.

7. Verfahren nach einem der Ansprüche 1 bis 6, bei dem die zweite Funkstation (R) die Fehlernachricht (NACK) empfängt und ermittelt, ob die Nachricht (DATA) erneut von der zweiten Funkstation (R) zu versenden ist.

8. Verfahren nach Anspruch 7, bei dem die Ermittlung anhand von von der dritten Funkstation (H) gesendeten und von der zweiten Funkstation (R) empfangenen Informationen erfolgt.

9. Verfahren nach Anspruch 7 oder 8, bei dem die Ermittlung anhand von von der ersten Funkstation (SI) versendeten und von der zweiten Funkstation (R) empfangenen Informationen erfolgt.

10. Verfahren nach einem der Ansprüche 1 bis 9, bei dem zumindest ein Parameter der Versendung der Nachricht (DATA) durch die dritte Funkstation (H) von einer Empfangsqualität der Fehlernachricht (NACK) auf Seiten der dritten Funkstation (H) abhängt.

11. Verfahren nach einem der Ansprüche 1 bis 10, bei dem die Fehlernachricht (NACK) an die zweite Funkstation (R) adressiert ist.

12. Verfahren nach einem der Ansprüche 1 bis 11, bei dem die dritte Funkstation (H) nach Empfang der Nachricht (DATA) die Nachricht (DATA) eine vorgegebene Zeitspanne speichert.

13. Verfahren nach einem der Ansprüche 1 bis 12, bei dem vor der Versendung der Nachricht (DATA) durch die dritte Funkstation (H) eine Kommunikation zwischen der ersten Funkstation (SI) und der dritten Funkstation (H) betreffend für die Versendung der Nachricht (DATA) zu verwendende Funkressourcen erfolgt.

14. Funkstation (H) zur Kommunikation per Funk, mit
Mitteln zum Empfangen einer an eine erste weitere Funkstation (SI) adressierten von einer zweiten weiteren Funkstation (R) gesendeten Nachricht (DATA),
Mitteln zum Empfangen einer von der ersten weiteren Funkstation (SI) gesendeten Fehlernachricht (NACK), wobei die Fehlernachricht (NACK) eine erneute Übertragung der Nachricht (DATA) an die erste weitere Funkstation (SI) anfordert, und
Mitteln zum Versenden der Nachricht (DATA) an die erste weitere Funkstation (SI) im Anschluss an den Empfang der Fehlernachricht (NACK).

15. Funkstation (SI) zur Kommunikation per Funk, mit
Mitteln zum Empfangen einer von einer zweiten Funkstation (R) gesendeten an die Funkstation (SI) adressierten Nachricht (DATA),
Mitteln zum Versenden einer Fehlernachricht (NACK), wobei die Fehlernachricht (NACK) eine erneute Übertragung der Nachricht (DATA) an die Funkstation (SI) anfordert, und
Mitteln zum Empfangen der Nachricht (DATA) von einer dritten Funkstation (H) im Anschluss an die Versendung der Fehlernachricht (NACK).
